# EUROPEAN PATENT SPECIFICATION

(11) **EP 3 030 893 B1**
(45) Date of publication and mention of the grant of the patent: **21.10.2020**
(21) Application number: 14755285.5
(22) Date of filing: 08.08.2014
(51) Int. Cl.: G01N 27/447

(54) **APPLICATOR COMB FOR GEL ELECTROPHORESIS**
APPLIKATORKAMM FÜR GEL-ELEKTROPHORESE
PEIGNE D'APPLICATEUR POUR ÉLECTROPHORÈSE EN GEL

(30) Priority: 09.08.2013 US 201361864336 P; 15.04.2014 US 201461979795 P
(43) Date of publication of application: 15.06.2016
(73) Proprietor: Helena Laboratories Corporation, Beaumont, TX 77704 (US)
(72) Inventor: GUADAGNO, Philip, Mechanicsville, VA 23116 (US)
(74) Representative: ARC-IP
(86) International application number: PCT/US2014/050397
(87) International publication number: WO 2015/021413

(56) References cited:
- EP-A2- 1 197 750
- EP-A2- 1 338 893
- WO-A1-98/00706
- WO-A1-99/54721
- US-A- 5 284 565

## Description

### FIELD

The invention is related to the field of electrophoretic analysis of biological specimens, including the application of biological samples to an electrophoresis plate. More specifically, the present invention is directed to a fluid applicator device and a method for depositing a liquid sample on a substrate utilizing the fluid applicator device for in situ electrophoretic analysis of biological specimens.

### BACKGROUND

In clinical laboratory practice, various techniques, such as electrophoresis, are used to apply samples to substrates for separation and analysis. Electrophoresis in general is the voltage-driven migration of suspended and/or colloidal particles in a liquid or a gel, due to the effect of a potential difference across immersed electrodes. In many devices that use electrophoresis, the strategy is to apply a sample just to the surface of a substrate, then apply a voltage to separate the components of the sample. This strategy is used in techniques like immunofixation-based electrophoresis and two-dimensional electrophoresis.

Electrophoresis is often used in the study of proteins and colloidal particles from biological samples, such as evaluation of lipoparticles and lipoproteins. In immunofixation methods, such as described in U.S. Patent Application Publication No. 2012/0052594, a biological sample (e.g., serum) is applied to a substrate and the components are electrophoresed. Anti-sera containing labeled antibodies that target specific components of the blood is applied to the substrate. The antibodies attach to their antigen targets, and the targets can be identified through some means of detecting the label.

In clinical applications, it is desirable to analyze many samples in parallel on the same substrate. This reduces the cost per sample analyzed and saves substantial time. High throughput instruments and devices, such as the SPIFE 3000 Assay instrument by Helena Laboratories, are made for this purpose.

High throughput instruments use an applicator comb to apply a series of samples in a single line on the substrate. Such an applicator comb, having a design using squared-off teeth, is described in U.S. Patent No. 6,544,395.

There is a desire in the art to increase the number of samples per substrate to increase throughput and make the method more efficient. Increasing the number of teeth per applicator comb would accomplish this goal. However, increasing the number of teeth without a change in design is not effective due to reduced fluid control in the smaller tooth dimensions. Also, structural integrity is lost when the tooth width is reduced, making each tooth more easily deformable during manufacture and when in contact with sample reservoirs and the substrate.

Simply making the teeth smaller to accommodate more samples non-reproducibly reduces the amount of sample per tooth deposited/transferred, lowering the ability to detect target components of the sample after they have been separated. Additionally, variable sample deposition with increasing the number of teeth per applicator comb can cause lane contamination so that adjacent lane samples bleed into one another rendering the samples as unreliable for measurement.

WO1998000706A1 provides a sample applicator comprising a substrate; a membrane for releasably retaining sample fluid; and fingers having loading areas, and in some embodiments sample inhibiting agents. EP1197750A2 provides automated and semi-automated apparatuses and methods for controlled volume and precise placement of substances. Combinations of applicator tips, applicator tip assemblies, applicator reservoirs, applicator holders and moveable racks precisely and accurately place sample and testing chemicals on substrates. EP1338893 provides an applicator of a fluid sample on a substrate, comprising at least an applying blade substantially of rectangular shape in its turn defining a body of a blade, a tip of the blade, and two facing side edges of the blade, characterised in that each blade comprises a drain defining a physical barrier for the fluid sample and at least one calibrated retention aperture between the tip of the blade and the drain of the blade.

In previous efforts to generate a greater sample density on the gel, the teeth were manufactured to be narrower. However, a direct reduction in size/geometry led to inconsistent liquid management and generally reduced liquid deposition. The volume of the liquid to be applied must be of sufficient volume to accommodate the sensitivity of the assay. The narrower tooth must therefore have the ability to both load appropriate volumes and unload those volumes in a controlled and reproducible fashion. A narrower tooth without additional surface to adsorb the liquid will result in the liquid droplet surface protruding too far from the surface of the tooth, increasing the necessary surface tension to hold the liquid droplet in place. The flash dimension of each tooth is insufficient to maintain surface tension of the liquid droplet to prevent premature liquid release if the tooth is too narrow and no other provision is made to hold the liquid.

The present invention is directed to overcoming these and other deficiencies in the art.

### SUMMARY

One aspect of the present invention relates to a fluid applicator device according to claim 1.

Another aspect of the present invention relates to a method for depositing a liquid sample on a substrate according to claim 9.

The present invention provides improved performance for sample loading, transfer, and deposition. The invention offers improvements in liquid management, including improved control of liquid flow during sample deposition. The invention further provides an applicator with a higher number of applicator teeth without loss of resolution, sensitivity or fluid transfer control. The higher number of applicator teeth improves efficiency in high throughput laboratories.

### BRIEF DESCRIPTION OF THE DRAWINGS

Figure 1 is a side view of an embodiment of a fluid applicator device that may be used in the present invention.
Figure 2 is a side view of an embodiment of an individual tooth for use with the fluid applicator device of the present invention.
Figure 3 is a side view of another embodiment of an individual tooth of the fluid applicator device of the present invention.
Figures 4, and 6 are side views of alternative embodiments of an individual tooth for the fluid applicator device of the present invention. Figure 5 is a side view of an individual tooth for a fluid applicator device, which no longer forms part of the present invention.
Figure 7 is a side view of an embodiment of the individual tooth of the fluid applicator device of the present invention formed using laser cutting techniques.

### DETAILED DESCRIPTION

The present invention relates to a fluid applicator device and a method for depositing a liquid sample on a substrate using the fluid applicator device.

One aspect of the present invention relates to a fluid applicator device including an applicator body having a surface that is generally planar. A plurality of aligned applicator teeth extend from said applicator body. Each applicator tooth extends in a longitudinal direction from said applicator body along a length from a base of the applicator tooth proximate to the applicator body to a tip of the applicator tooth distal to the applicator body. One or more of said plurality of aligned applicator teeth comprises at least two perforations spaced apart in said longitudinal direction. At least one applicator tooth of the plurality of aligned applicator teeth has a width that is greater at the base than at the tip.

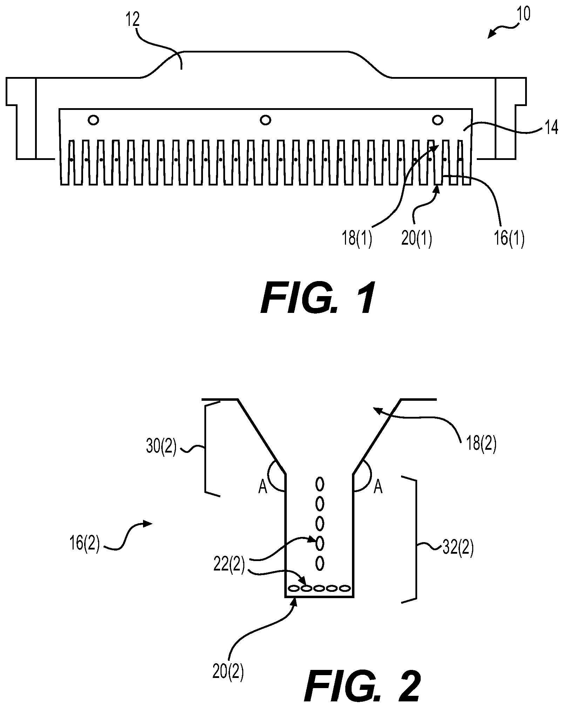

FIG. 1 shows a side view of one embodiment of a fluid applicator device 10 for use in the present invention. Fluid applicator device 10 may be used for the parallel application of samples to a gel substrate for gel electrophoresis applications. The fluid applicator device 10 as described herein may be used with any suitable gel electrophoresis system and/or method. Such gel electrophoresis systems and methods include, for example, those described in WO 2013/181267 and U.S. Patent Application Publication No. 2012/0052594.

For instance, the fluid applicator device 10 may be used in carrying out the step of depositing a sample in a receiving well of an electrophoretic gel as part of a method for performing electrophoresis. An exemplary method may be carried out with in-situ calibration and involve combining a volume of a test sample with a volume or quantity of a calibrating sample to form a final volume, in which the volume or quantity of the calibrating sample includes a known concentration of a calibrator and the final volume includes a known ratio of test sample to calibrating sample. The method also includes depositing a loading fraction in a receiving well of an electrophoretic gel, in which the loading fraction is a fraction of the final volume and separating the loading fraction along a common separation lane of the electrophoretic gel such that components of the test sample and the calibrator are separated from one another along the common separation lane. The method also includes detecting the calibrator and separated components of test sample within the common separation lane and measuring the level of the calibrator and separated components of the test sample based on the detecting, thereby performing electrophoresis with in-situ calibration.

As a further example, the fluid applicator device 10 may be used in carrying out the step of depositing a sample in a receiving well of an electrophoretic gel as part of a method for assessing the level of specific lipoprotein particles present in a bodily fluid, as described in U.S. Patent Application Publication No. 2012/0052594. The exemplary method involves separating lipoprotein particles present in a bodily fluid sample by gel electrophoresis on a gel electrophoresis substrate, exposing the substrate to an antibody to detect an immunologically active agent associated with lipoprotein particles or components of lipoprotein particles, exposing the substrate to a reagent for detection of the presence of proteins or lipids, and determining the level of specific lipoprotein particles.

Kits including the fluid applicator device 10 described herein together with a system for gel electrophoresis are also contemplated. For example, a kit for gel electrophoresis may include an assembly, system, or apparatus, as described in U.S. Patent Application Publication No. 2012/0052594, and a fluid applicator device 10 as described herein.

Fluid applicator device 10 includes a handle 12, an applicator body 14, and applicator teeth 16(1), although fluid applicator device 10 may include other elements in other configurations. Handle 12 is used for manual or machine manipulation of fluid applicator device 10, as for example, described in U.S. Patent No. 6,544,395. Handle 12 may have holes, notches, slots, protrusions, or other features that facilitate handling and alignment of fluid applicator device 10 for the sample loading and sample deposition procedures, as described further below.

Applicator body 14 is attached to handle 12 at planar surface 15 of applicator body 14. In one example, applicator body 14 is rigidly attached to handle 12 using adhesive or glue, although applicator body 14 may be mechanically attached to handle 12 by tabs or other fasteners. Applicator body 14 may be constructed of a metallized polymer, such as aluminized polyester or Mylar™. Use of the metalized polymer for the applicator body 14 provides a hydrophilic surface over the hydrophobic polymer. In one example, applicator body 14 may have a width from about 0.2cm to 11.5cm.

Applicator body 14 includes a number of applicator teeth 16(1) aligned along and extending longitudinally therefrom. The applicator teeth 16(1) may be distributed over the width of the applicator body 14. Although applicator body 14 is illustrated with twenty-eight applicator teeth 16(1), other numbers of applicator teeth 16(1) may be utilized. By way of example only, the fluid applicator device 10 may include a number of applicator teeth 16(1) in the range between 1 and 55, although the use of a higher number of applicator teeth 16(1) may be contemplated. In one example, fluid applicator device 10 includes at least (*i.e.,* a minimum of) 20, 25, 30, 35, or 40 applicator teeth 16(1). In another example, fluid applicator device 10 includes up to (*i.e.,* a maximum of) 45, 50, or 55 applicator teeth 16(1).

Applicator teeth 16(1) serve as an interface with sample wells and a sample substrate for deposition of a liquid sample on a substrate, as described further below. Each of the applicator teeth 16(1) is designed to carry and transfer a sample load of about 1µl in the footprint of each tooth. The footprint consists of a one-dimensional (thin line) interface corresponding to the blade of the tooth that is about 5 mm long bounded on both sides by a gap of about 5 mm between each adjacent tooth, although the footprint may have other dimensions. Although fluid applicator device 10 is illustrated with applicator teeth 16(1), it is to be understood that fluid applicator device 10 could include applicator teeth with other configurations, such as applicator teeth 16(2)-16(7) as illustrated in Figures 2-7. Applicator device 10 may include various combinations of the configurations illustrated in Figures 2-7 located on the same applicator device 10 to permit variable depositions of the same or different fluid samples upon a selected substrate.

Referring again to Figure 1, each of the applicator teeth 16(1) includes a base 18(1) and a tip 20(1). Each base 18(1) is located proximate to applicator body 14. Each of the applicator teeth 16(1) extends longitudinally from applicator body 14 along a length from base 18(1) to the tip 20(1), which is located distal to applicator body 14. In one example, at least one of the applicator teeth 16(1) includes a base 18(1) with a width greater than the tip 20(1) to facilitate sample loading, transfer, and deposition. In another example, each of the applicator teeth 16(1) includes base 18(1) with a width greater than the tip 20(1). The applicator teeth 16(1) may be formed in a variety of shapes that provide the configuration with base 18(1) with a width greater than the tip 20(1), including triangular shapes, curved shapes, boxed shapes, or a combination thereof, as illustrated in Figures 2-6 and described further below.

Referring now to Figures 2-7, the applicator teeth 16(2)-16(7) may include one or more perforations 22(2)-22(7) in various configurations, to modulate sample liquid retention and transfer, although other structures, such as apertures and/or notches, may be utilized to modulate sample liquid retention and transfer. Perforations 22(2)-22(7) in the applicator teeth 16(2-16(7) serve to control or facilitate liquid flow depending on the design. By way of example, as illustrated in Figures 2-7, perforations 22(2)-22(7) may be located lengthwise on the applicator tooth, width-wise, or a combination thereof. The perforations 22(2)-22(7) can be located at the top, middle, or bottom portion of each tooth, or possibly aligned down a central axis of the tooth. Each tooth may include a number of perforations 22(2)-22(7), all of consistent size and shape, or varying in size and shape. Applicator device 10 may include various combinations of the perforations 22(2)-22(7) in order to provide for variable depositions of the same or different samples on a selected substrate.

Figure 2 is a side view of one embodiment of an applicator tooth 16(2) that may be utilized with fluid applicator device 10. Applicator tooth 16(2) includes a base 18(2) and a tip 20(2) that meet at obtuse angles A. In one example, the angles A are greater than or equal to about 110 degrees. The obtuse angles A promote fluid volume control by providing a surface to which a liquid sample will stick while limiting the length of the interface with the substrate. The applicator tooth 16(2) includes a tooth load section 30(2) near base 18(2). The tooth load section 30(2) has a width that tapers from base 18(2) toward the tip 20(2), but ending prior to tip 20(2). The applicator tooth 16(2) also includes a tooth delivery section 32(2) located near tip 20(2). The tooth delivery section 32(2) has a width that is about the same along its length. Applicator tooth 16(2) includes perforations 22(2) located along the central axis of the applicator tooth 16(2). Applicator tooth 16(2) also includes perforations 22(2) located near tip 20(2).

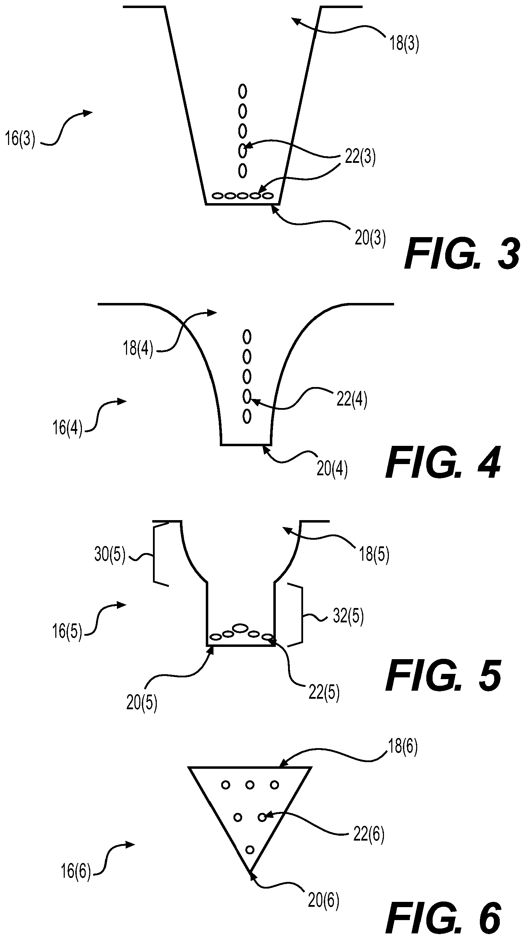

Figure 3 is a side view of an additional embodiment of an applicator tooth 16(3) that may be utilized with fluid applicator device 10. Applicator tooth 16(3) includes a base 18(3) and a tip 20(3), with the width of applicator tooth 16(3) tapering continuously in a straight line from base 18(3) to tip 20(3). Applicator tooth 16(3) includes perforations 22 located along the central axis of the applicator tooth 16(3). Applicator tooth 16(3) also includes perforations 22 located near tip 20(3). Figure 4 is a side view of another embodiment of an applicator tooth 16(4) that may be utilized with fluid applicator device 10. Applicator tooth 16(4) includes a base 18(4) and a tip 20(4), with the width of applicator tooth 16(4) tapering continuously in a curved line from base 18(4) to tip 20(4). Applicator tooth 16(4) includes perforations 22(3) located along the central axis of the applicator tooth 16(4).

Figure 5 is a side view of an additional embodiment of an applicator tooth 16(5) that may be utilized with fluid applicator device 10. Applicator tooth 16(5) includes a base 18(5) and a tip 20(5), with the width of applicator tooth 16(5) tapering discontinuously between the base 18(5) to tip 20(5). In this example, applicator tooth 16(5) includes a width defined by an edge comprising a curved and a straight surface. The applicator tooth 16(5) includes a tooth load section 30(5) near base 18(5). The tooth load section 30(5) has a width that tapers from base 18(5) toward the tip 20(5), but ending prior to tip 20(5). The applicator tooth 16(5) also includes a tooth delivery section 32(5) located near tip 20(5). The tooth delivery section 32(5) has a width that is about the same along its length. Applicator tooth 16(5) includes perforations 22(5) located near the tip 16(5) in an arc-shaped design, although other arrangements of the perforations are possible.

Figure 6 is a side view of another embodiment of an applicator tooth 16(6) that may be utilized with fluid applicator device 10. Applicator tooth 16(6) includes a triangular body that extends between a base 18(6) and a tip 20(6). Applicator tooth 16(6) includes perforations 22(6) distributed about the triangular tooth body.

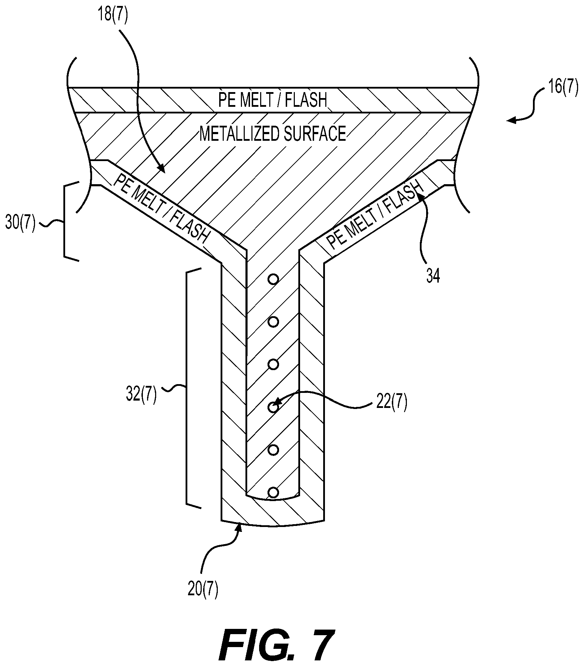

Referring again to Figure 1, the applicator teeth 16(1) may be formed in applicator body 14 using laser cutting, although other methods of forming the plurality of teeth 16(1), such a die-cutting, may be utilized. In one example, a combination of cutting methods, such as laser cutting and die cutting, may be used to create optimal surfaces on the applicator teeth 16(1) for liquid retention as described below. Figure 7 shows an embodiment of an applicator tooth 16(7) formed by laser cutting of a metalized polymer. Applicator tooth 16(7) includes a base 18(7) and a tip 20(7) that meet at obtuse angles. In one example, the angles are greater than or equal to about 110 degrees. The obtuse angles promote fluid volume control by providing a surface to which a liquid sample will stick while limiting the length of the interface with the substrate. The applicator tooth 16(7) includes a tooth load section 30(7) near base 18(7). The tooth load section 30(7) has a width that tapers from base 18(7) toward the tip 20(7), but ending prior to tip 20(7). The applicator tooth 16(7) also includes a tooth delivery section 32(7) located near tip 20(7). The tooth delivery section 32(7) has a width that is about the same along its length. The dimensions between the tooth load section 30(7) and the tooth delivery section 32(7) controls delivery rate and the volume of sample applied. Applicator tooth 16(7) also includes perforations 22(7) located along the central axis of the applicator tooth 16(7).

Laser cutting melts the polymer around outside edges to create a flash 34 around the outside of the applicator tooth 16(7). In use with a fluid such as serum, the melted polymer *(i.e.* flash 34) is sufficiently hydrophobic to prevent serum from percolating off of the applicator tooth 16(7) when the liquid has sufficient surface area to adsorb on to the rest of the applicator tooth 16(7). The flash 34 maintains the fluid load on the surface of the applicator tooth 16(7) and prevents premature deposition or release of the fluid sample. In one example, the width of tip 20(7) of applicator tooth 16(7) is greater than or equal to the width of flash 34, and controls the dimension of fluid deposited on the substrate.

Another aspect of the present invention relates to a method for depositing a liquid sample on a substrate. The method involves providing a fluid applicator device comprising an applicator body having a surface that is generally planar. A plurality of aligned applicator teeth extend from said applicator body. Each applicator tooth extends in a longitudinal direction from said applicator body along a length from a base of the applicator tooth proximate to the applicator body to a tip of the applicator tooth distal to the applicator body, wherein one or more of said plurality of aligned applicator teeth comprises at least two perforations spaced apart in said longitudinal direction. At least one applicator tooth of the plurality of aligned applicator teeth has a width that is greater at the base than at the tip. Each tooth of the applicator device is inserted into and removed from a supply volume of sample, thereby retaining a test volume of sample on each tooth. At least a portion of the test volume of sample is deposited onto a substrate by contacting the tips of the plurality of teeth of the fluid applicator device with the substrate.

Referring again to Figure 1, in operation, the applicator teeth 16(1) are inserted into and removed from a sample reservoir including a fluid sample therein. The sample reservoir may contain any fluid sample for which electrophoresis testing is desired. The sample reservoir includes a supply volume of the fluid sample. The applicator teeth 16(1) retain a small portion, or a test volume, of the fluid sample on each tooth. In one example, each tooth is designed to carry and transfer a fluid sample load of about 1 µl. In one example, as illustrated in Figure 7, the liquid sample adsorbs to the applicator teeth 16(7) by hydrogen bonding. The liquid sample is retained effectively by a combination of the flash 34 along the edges of the applicator teeth 16(2) and the perforations 22(7) along the central axis of the tooth body and at the tip 20(2).

Referring again to Figure 1, next, at least a portion of the retained test volume of the fluid sample is deposited onto a substrate by contacting the tips 20(1) of the applicator teeth 16(1) of fluid applicator device 10 to the substrate. In one example, the substrate is an electrophoresis gel surface. Contacting the tips 20(1) causes the sample liquid retained on the applicator teeth 16(1) to come into contact with the substrate and disperses from the applicator teeth 16(1) a one-dimensional line on the substrate, equal to the interface dimension of tip 20(1) of each of the applicator teeth 16(1). In one example, as shown in Figure 2, the relationship between the dimensions of the tooth load section 30(2) and the tooth delivery section 32(2) controls the delivery rate and the volume of the sample applied to the substrate.

Although preferred embodiments have been depicted and described in detail herein, it will be apparent to those skilled in the relevant art that various modifications, additions, substitutions, and the like can be made and these are therefore considered to be within the scope of the invention as defined in the claims which follow.

## Claims

1. A fluid applicator device (10) comprising:
an applicator body (14); and
a plurality of aligned applicator teeth (16), each applicator tooth (16) of said plurality of aligned applicator teeth (16) extending in a longitudinal direction from said applicator body (14) along a length from a base (18) of the applicator tooth (16) proximate to the applicator body (14) to a tip (20) of the applicator tooth (16) distal to the applicator body (14), wherein each tooth (16) of said plurality of aligned applicator teeth (16) comprises at least two perforations (22) spaced apart in said longitudinal direction,
**characterized in that** each applicator tooth (16) of said plurality of aligned applicator teeth (16) has a width that is greater at the base (18) than at the tip (20);
wherein the at least two longitudinally spaced apart perforations (22) of each tooth (16) are positioned along a center of the tooth (16), and wherein the center of each tooth (16) extends in said longitudinal direction along a length from the base (18) to the tip (20) of the tooth (16).

2. The fluid applicator device (10) of claim 1, wherein each tooth (16) of said plurality of aligned applicator teeth (16) further comprises:
a main tooth body surface covering a width of a central portion of each tooth (16) of said plurality of aligned applicator teeth (16) and comprising a first surface material; and
a perimeter flash surface (34) bordering said main tooth body surface at a perimeter of each tooth (16) of said plurality of aligned applicator teeth (16), wherein said perimeter flash surface (34) comprises a second surface material, and wherein the second surface material (34) is more hydrophobic than the first surface material.

3. The fluid applicator device (10) of claim 2, wherein the first surface material is a metalized surface material.

4. The fluid applicator device (10) of claim 2, wherein the second surface material is a polymer surface material.

5. The fluid applicator device (10) of claim 2, wherein the width at the tip (20) of each tooth (16) of said plurality of aligned applicator teeth (16) is greater than about two times the width of said perimeter flash surface (34).

6. The fluid applicator device (10) of claim 1, wherein the base (18) of each tooth (16) of said plurality of aligned applicator teeth (16) and the tip (20) of each tooth (16) of said plurality of aligned applicator teeth (16) meet at an obtuse angle.

7. The fluid applicator device (10) of claim 1, wherein each tooth (16) of said plurality of aligned applicator teeth (16) further comprises:
a tooth load section (30) near the base (18), wherein the width of each tooth (16) of said plurality of aligned applicator teeth (16) in the tooth load section (30) tapers along the length from the base (18) toward the tip (20); and
a tooth delivery section (32) near the tip (20), wherein the width of each tooth (16) of said plurality of aligned applicator teeth (16) in the tooth delivery section (32) is about the same along the length from the tip (20) toward the base (18).

8. The fluid applicator device (10) of claim 1, wherein each tooth (16) of said plurality of aligned applicator teeth (16) includes five perforations (22) spaced apart in said longitudinal direction and five perforations (22) spaced apart in a direction generally perpendicular to said longitudinal direction.

9. A method for depositing a liquid sample on a substrate, the method comprising:
providing a fluid applicator device (10) comprising:
an applicator body (14);
and
a plurality of aligned applicator teeth (16), each applicator tooth (16) of said plurality of aligned applicator teeth (16) extending in a longitudinal direction from said applicator body (14) along a length from a base (18) of the applicator tooth (16) proximate to the applicator body (14) to a tip (20) of the applicator tooth (16) distal to the applicator body (14), wherein each tooth (16) of said plurality of aligned applicator teeth (16) comprises at least two perforations (22) spaced apart in said longitudinal direction,
inserting and removing each tooth (16) of said plurality of teeth (16) of the fluid applicator device (10) into a supply volume of sample, thereby retaining a test volume of sample on each tooth (16); and
depositing at least a portion of the test volume of sample onto a substrate by contacting the tips (20) of the plurality of teeth (16) of the fluid applicator device (10) with the substrate;
**characterized in that** each applicator tooth (16) of said plurality of aligned applicator teeth (16) has a width that is greater at the base (18) than at the tip (20), wherein the at least two longitudinally spaced apart perforations (22) of each tooth (16) are positioned along a center of the tooth (16), and wherein the center of each tooth (16) extends in said longitudinal direction along a length from the base (18) to the tip (20) of the tooth (16).

10. The method of claim 9, wherein the substrate is an electrophoretic substrate.

11. The method of claim 9, wherein the fluid applicator device is according to any one of claims 2 to 8.

12. The method of claim 11 when dependent on claim 7, wherein the dimension of the tooth load section (30) to the dimension of the tooth delivery section (32) determines the rate of said depositing and the volume of test sample applied to the substrate.

## Patentansprüche

1. Fluidapplikatorvorrichtung (10), umfassend:
einen Applikatorkörper (14); und
eine Mehrzahl ausgerichteter Applikatorzähne (16), wobei sich jeder Applikatorzahn (16) der Mehrzahl ausgerichteter Applikatorzähne (16) in einer Längsrichtung von dem Applikatorkörper (14) entlang einer Länge von einer Basis (18) des Applikatorzahns (16) in der Nähe des Applikatorkörpers (14) zu einer Spitze (20) des Applikatorzahns (16) distal zu dem Applikatorkörper (14) erstreckt, wobei jeder Zahn (16) der Mehrzahl ausgerichteter Applikatorzähne (16) zumindest zwei Perforationen (22) umfasst, die in der Längsrichtung voneinander beabstandet sind,
**dadurch gekennzeichnet, dass** jeder Applikatorzahn (16) der Mehrzahl ausgerichteter Applikatorzähne (16) eine Breite aufweist, die an der Basis (18) größer ist als an der Spitze (20);
wobei die zumindest zwei longitudinal beabstandeten Perforationen (22) jedes Zahns (16) entlang einer Mitte des Zahns (16) positioniert sind und wobei sich die Mitte jedes Zahns (16) in der Längsrichtung entlang einer Länge von der Basis (18) zu der Spitze (20) des Zahns (16) erstreckt.

2. Fluidapplikatorvorrichtung (10) nach Anspruch 1, wobei jeder Zahn (16) der Mehrzahl ausgerichteter Applikatorzähne (16) ferner umfasst:
eine Hauptzahnkörperfläche bzw. -oberfläche, die eine Breite eines zentralen Abschnitts jedes Zahns (16) der Mehrzahl ausgerichteter Applikatorzähne (16) bedeckt und ein erstes Flächen- bzw. Oberflächenmaterial umfasst; und
eine Umfangsblitzfläche bzw. -oberfläche (34), die an einem Umfang jedes Zahns (16) der Mehrzahl ausgerichteter Applikatorzähne (16) an die Hauptzahnkörperoberfläche angrenzt, wobei die Umfangsblitzfläche bzw. -oberfläche (34) ein zweites Flächen- bzw. Oberflächenmaterial umfasst und wobei das zweite Fläche- bzw. Oberflächenmaterial (34) hydrophober ist als das erste Flächen- bzw. Oberflächenmaterial.

3. Fluidapplikatorvorrichtung (10) nach Anspruch 2, wobei das erste Oberflächenmaterial ein metallisiertes Oberflächenmaterial ist.

4. Fluidapplikatorvorrichtung (10) nach Anspruch 2, wobei das zweite Oberflächenmaterial ein Polymeroberflächenmaterial ist.

5. Fluidapplikatorvorrichtung (10) nach Anspruch 2, wobei die Breite an der Spitze (20) jedes Zahns (16) der Mehrzahl ausgerichteter Applikatorzähne (16) größer als etwa das Zweifache der Breite der Umfangsblitzoberfläche (34) ist.

6. Fluidapplikatorvorrichtung (10) nach Anspruch 1, wobei sich die Basis (18) jedes Zahns (16) der Mehrzahl ausgerichteter Applikatorzähne (16) und die Spitze (20) jedes Zahns (16) der Mehrzahl ausgerichteter Applikatorzähne (16) in einem stumpfen Winkel treffen.

7. Fluidapplikatorvorrichtung (10) nach Anspruch 1, wobei jeder Zahn (16) der Mehrzahl ausgerichteter Applikatorzähne (16) ferner umfasst:
eine Zahnbelastungs- bzw. -lastsektion (30) nahe der Basis (18), wobei sich die Breite jedes Zahns (16) der Mehrzahl ausgerichteter Applikatorzähne (16) in der Zahnlastsektion (30) entlang der Länge von der Basis (18) zu der Spitze (20) hin verjüngt; und
eine Zahnabgabesektion (32) nahe der Spitze (20), wobei die Breite jedes Zahns (16) der Mehrzahl ausgerichteter Applikatorzähne (16) in der Zahnabgabesektion (32) entlang der Länge von der Spitze (20) zu der Basis (18) hin ungefähr gleich ist.

8. Fluidapplikatorvorrichtung (10) nach Anspruch 1, wobei jeder Zahn (16) der ungefähr gleich ist Applikatorzähne (16) fünf Perforationen (22), die in der Längsrichtung voneinander beabstandet sind, und fünf Perforationen (22) enthält, die in einer Richtung im Allgemeinen senkrecht zu der Längsrichtung beabstandet sind.

9. Verfahren zum Abscheiden einer Flüssigkeitsprobe auf einem Substrat, wobei das Verfahren umfasst:
Bereitstellen einer Fluidapplikatorvorrichtung (10), umfassend:
einen Applikatorkörper (14); und
eine Mehrzahl ausgerichteter Applikatorzähne (16), wobei sich jeder Applikatorzahn (16) der Mehrzahl ausgerichteter Applikatorzähne (16) in einer Längsrichtung von dem Applikatorkörper (14) entlang einer Länge von einer Basis (18) des Applikatorzahns (16) in der Nähe des Applikatorkörpers (14) zu einer Spitze (20) des Applikatorzahns (16) distal zu dem Applikatorkörper (14) erstreckt, wobei jeder Zahn (16) der Mehrzahl ausgerichteter Applikatorzähne (16) zumindest zwei Perforationen (22) umfasst, die in der Längsrichtung voneinander beabstandet sind,
Einsetzen und Entfernen jedes Zahns (16) der Mehrzahl von Zähnen (16) der Fluidapplikatorvorrichtung (10) in ein Zufuhrvolumen der Probe, wodurch ein Testvolumen der Probe auf jedem Zahn (16) gehalten wird; und
Abscheiden zumindest eines Abschnitts des Testvolumens der Probe auf einem Substrat durch Inkontaktbringen der Spitzen (20) der Mehrzahl von Zähnen (16) der Fluidapplikatorvorrichtung (10) mit dem Substrat;
**dadurch gekennzeichnet, dass** jeder Applikatorzahn (16) der Mehrzahl ausgerichteter Applikatorzähne (16) eine Breite aufweist, die an der Basis (18) größer ist als an der Spitze (20), wobei die zumindest zwei longitudinal beabstandeten Perforationen (22) jedes Zahns (16) entlang einer Mitte des Zahns (16) positioniert sind und wobei sich die Mitte jedes Zahns (16) in der Längsrichtung entlang einer Länge von der Basis (18) zu der Spitze (20) des Zahns (16) erstreckt.

10. Verfahren nach Anspruch 9, wobei das Substrat ein elektrophoretisches Substrat ist.

11. Verfahren nach Anspruch 9, wobei die Fluidapplikatorvorrichtung gemäß einem der Ansprüche 2 bis 8 ist.

12. Verfahren nach Anspruch 11, wenn abhängig von Anspruch 7, wobei die Abmessung der Zahnbelastungssektion (30) zu der Abmessung der Zahnabgabesektion (32) die Abscheidungsrate und das Volumen der auf das Substrat aufgebrachten Testprobe bestimmt.

## Revendications

1. Dispositif applicateur de fluide (10) comprenant:
un corps applicateur (14); et
une pluralité de dents applicatrices alignées (16), chaque dent applicatrice (16) de ladite pluralité de dents applicatrices alignées (16) s'étendant dans une direction longitudinale dudit corps applicateur (14) sur une longueur à partir d'une base (18) de la dent applicatrice (16) proche du corps applicateur (14) jusqu'à un bout (20) de la dent applicatrice (16) éloigné du corps applicateur (14), dans lequel chaque dent (16) de ladite pluralité de dents applicatrices alignées (16) comprend au moins deux perforations (22) espacées dans ladite direction longitudinale,
**caractérisé en ce que** chaque dent applicatrice (16) de ladite pluralité de dents applicatrices alignées (16) a une largeur plus grande à la base (18) qu'au bout (20); dans lequel les au moins deux perforations (22) longitudinalement espacées de chaque dent (16) sont positionnées le long du centre de la dent (16), et dans lequel le centre de chaque dent (16) s'étend dans ladite direction longitudinale sur une longueur depuis la base (18) jusqu'au bout (20) de la dent (16).

2. Dispositif applicateur de fluide (10) selon la revendication 1, dans lequel chaque dent (16) de ladite pluralité de dents applicatrices alignées (16) comprend en outre:
une surface principale de corps de dent recouvrant la largeur d'une partie centrale de chaque dent (16) de ladite pluralité de dents applicatrices alignées (16) et
comprenant un premier matériau de surface; et
une surface d'écoulement périmétrique (34) bordant ladite surface principale de corps de dent au périmètre de chaque dent (16) de ladite pluralité de dents applicatrices alignées (16), dans lequel ladite surface d'écoulement périmétrique (34) comprend un deuxième matériau de surface et dans lequel le deuxième matériau de surface (34) est plus hydrophobe que le premier matériau de surface.

3. Dispositif applicateur de fluide (10) selon la revendication 2, dans lequel le premier matériau de surface est un matériau de surface métallisé.

4. Dispositif applicateur de fluide (10) selon la revendication 2, dans lequel le deuxième matériau de surface est un matériau de surface polymère.

5. Dispositif applicateur de fluide (10) selon la revendication 2, dans lequel la largeur au bout (20) de chaque dent (16) de ladite pluralité de dents applicatrices alignées (16) est plus grande qu'environ deux fois la largeur de ladite surface d'écoulement périmétrique (34).

6. Dispositif applicateur de fluide (10) selon la revendication 1, dans lequel la base (18) de chaque dent (16) de ladite pluralité de dents applicatrices alignées (16) et le bout (20) de chaque dent (16) de ladite pluralité de dents applicatrices alignées (16) se rencontrent à un angle obtus.

7. Dispositif applicateur de fluide (10) selon la revendication 1, dans lequel chaque dent (16) de ladite pluralité de dents applicatrices alignées (16) comprend en outre:
une section de charge de dent (30) près de la base (18), dans lequel la largeur de chaque dent (16) de ladite pluralité de dents applicatrices alignées (16) dans la section de charge de dent (30) diminue progressivement sur la longueur à partir de la base (18) vers le bout (20); et
une section débitrice de dent (32) près du bout (20), dans lequel la largeur de chaque dent (16) de ladite pluralité de dents applicatrices alignées (16) dans la section débitrice de dent (32) est à peu près identique sur la longueur du bout (20) vers la base (18).

8. Dispositif applicateur de fluide (10) selon la revendication 1, dans lequel chaque dent (16) de ladite pluralité de dents applicatrices alignées (16) comprend cinq perforations (22) espacées dans ladite direction longitudinale, et cinq perforations (22) espacées dans une direction généralement perpendiculaire à ladite direction longitudinale.

9. Procédé de dépôt d'un échantillon de liquide sur un substrat, le procédé comprenant:
la fourniture d'un dispositif applicateur de fluide (10) comprenant:
un corps applicateur (14);
et
une pluralité de dents applicatrices alignées (16), chaque dent applicatrice (16) de ladite pluralité de dents applicatrices alignées (16) s'étendant dans une direction longitudinale dudit corps applicateur (14) sur une longueur à partir d'une base (18) de la dent applicatrice (16) proche du corps applicateur (14) jusqu'à un bout (20) de la dent applicatrice (16) éloignée du corps applicateur (14), dans lequel chaque dent (16) de ladite pluralité de dents applicatrices alignées (16) comprend au moins deux perforations (22) espacées dans ladite direction longitudinale,
l'insertion et l'enlèvement de chaque dent (16) de ladite pluralité de dents (16) du dispositif applicateur de fluide (10) dans un volume d'alimentation en échantillon, retenant ainsi un volume test d'échantillon sur chaque dent (16); et
le dépôt d'au moins une partie du volume d'essai d'échantillon sur un substrat par mise en contact des bouts (20) de la pluralité de dents (16) du dispositif applicateur de fluide (10) avec le substrat;
**caractérisé en ce que** chaque dent applicatrice (16) de ladite pluralité de dents applicatrices alignées (16) a une largeur plus grande à la base (18) qu'au bout (20); dans lequel les au moins deux perforations (22) longitudinalement espacées de chaque dent (16) sont positionnées le long du centre de la dent (16), et dans lequel le centre de chaque dent (16) s'étend dans ladite direction longitudinale sur une longueur depuis la base (18) jusqu'au bout (20) de la dent (16).

10. Procédé selon la revendication 9, dans lequel le substrat est un substrat électrophorétique.

11. Procédé selon la revendication 9, dans lequel le dispositif applicateur de fluide est conforme à l'une quelconque des revendications 2 à 8.

12. Procédé selon la revendication 11, pour autant qu'elle dépende de la revendication 7, dans lequel la dimension de la section de charge de dent (30) par rapport à la dimension de la section débitrice de dent (32) détermine la vitesse dudit dépôt et du volume de l'échantillon d'essai appliqué au substrat.
